# EUROPEAN PATENT APPLICATION

(11) **EP 3 617 028 A1**
(43) Date of publication of application: **04.03.2020**
(21) Application number: 17936509.3
(22) Date of filing: 28.12.2017
(51) Int. Cl.: B61D 27/00, F24F 11/00

(54) **RAIL TRAIN AND AIR CONDITIONING CONTROL SYSTEM THEREOF**

(30) Priority: 27.12.2017 CN 201711450522; 27.12.2017 CN 201721869317 U
(71) Applicant: CRRC Changchun Railway Vehicles Co., Ltd., Changchun, Jilin 130000 (CN)
(72) Inventor: CAO, Yanhua, Jilin 130000 (CN); ZHAO, Jinlong, Jilin 130000 (CN); LI, Changsheng, Jilin 130000 (CN); CUI, Pengxiang, Jilin 130000 (CN); ZHAO, Feng, Jilin 130000 (CN)
(74) Representative: Herrmann, Uwe
(86) International application number: PCT/CN2017/119327
(87) International publication number: WO 2019/127201

(57) **Abstract**

An air conditioning control system of a rail train, and a rail train. The control system comprises: an environment temperature detection unit (1); an environment temperature determination unit (2); a controller central processing unit (3) for controlling an air conditioning system so that same switches to a heating device operation mode when a determination result of the environment temperature determination unit (2) is a high cold environment condition; a low temperature vehicle maintenance signal input unit (4); and an environment temperature sudden change determination unit (5), wherein the controller central processing unit (3) controls the air conditioning system so that same enters a low temperature vehicle maintenance mode, and the controller central processing unit (3) preferentially starts an antifreezing mode of the air conditioning system when an antifreezing determination unit (6) is activated.

## Description

This application claims the priority to Chinese Patent Application CN and CN, titled "RAIL TRAIN AND AIR CONDITIONING CONTROL SYSTEM THEREOF", filed on December 27, 2017 with the State Intellectual Property Office of People's Republic of China, both of which are incorporated herein by reference in their entireties.

### FIELD

The present disclosure relates to the technical field of railroad trains, and in particular to an air conditioning control system for a railroad train. In addition, the present disclosure further relates to a railroad train including the above air conditioning control system.

### BACKGROUND

With the continuous development of railroads, high-speed multiple unit trains are capable of travelling all over the country. Due to a great difference in climate between the South and the North, it is required to make various adaptive designs and controls for the multiple unit train which crosses different climatic zones at a high speed in a short period of time. Especially for an air conditioning system, not only the great temperature difference between the South and the North but also the inspection and maintenance requirements in winter in the northern regions necessitate special protective measures for the devices. In winter in northern regions, a train travels at an extreme low temperature and sometimes even in snowy weather. However, snow melting, inspection and maintenance need to be performed at a normal temperature, in which case the maximum difference between indoor and outdoor temperatures can be more than 60K. Therefore, it is necessary to provide a train with not only hardware devices which can adapt to an abrupt change in the environment temperature, but also a suitable control method for coping with this abrupt change in the environment temperature.

Currently, the air conditioning system of the high-speed multiple unit train is automatically controlled, and the logic for automatic control can meet comfort requirements in normal operation condition. However, for the air conditioning system used in the extreme cold region, the logic for automatic control which is designed for general purpose does not meet requirements in an extreme cold environment.

In the existing air conditioning system, a condensing chamber of an air conditioning unit may be sealed by snow, and some devices can even be blocked by ice when operating in a low temperature environment such as snowstorm. For the low temperature operation condition, the conventional train is equipped with only an anti-freezing start-up measure which is stored in an energized state outside the train and exposed to the low temperature environment, and does not have a measure for the control system for coping with operation, inspection and maintenance in the low temperature environment.

Therefore, the technical issue currently to be solved by those skilled in the art is to provide an air conditioning control system which adapts to the operation environment in an extreme cold region. The air conditioning control system is capable of properly controlling the temperature of the carriage air conditioning units and protecting various devices of the air conditioning system from being damaged in the extreme cold region.

### SUMMARY

It is an object of the present disclosure to provide an air conditioning control system for a railroad train which adapts to the operation environment in an extreme cold region. The air conditioning control system is capable of properly controlling the temperature of the carriage air conditioning units and protecting various devices of the air conditioning system from being damaged in the extreme cold region. It is another object of the present disclosure to provide a railroad train including the above air conditioning control system.

To solve the above technical issue, an air conditioning control system for a railroad train is provided according to the present disclosure, which includes:
an environment temperature detecting unit configured to obtain an environment temperature Tₒᵤₜ outside the railroad train;
an environment temperature determining unit configured to determine whether the environment temperature Tₒᵤₜ outside the railroad train detected by the environment temperature detecting unit meets a normal environment condition or an extreme cold environment condition;
a controller central processing unit communicatively connected with the environment temperature detecting unit and air conditioning units and configured to control an air conditioning system to switch to a device heating operation mode if the environment temperature determining unit determines that the extreme cold environment condition is met;
a low temperature train maintenance signal input unit configured to receive a low temperature train maintenance signal, where in the device heating operation mode, the controller central processing unit controls the air conditioning system to switch to a low temperature train maintenance mode on reception of the low temperature train maintenance signal;
an environment temperature abrupt change determining unit configured to determine whether a magnitude of change in the environment temperature Tₒᵤₜ outside the railroad train in a first preset time period S₁ is greater than or equal to ΔT, where in the device heating operation mode, the controller central processing unit controls the air conditioning system to switch to the low temperature train maintenance mode if it is determined that the magnitude of change in the environment temperature Tₒᵤₜ outside the railroad train in the first preset time period S₁ is greater than or equal to ΔT ; and
an anti-freezing determining unit configured to determine whether the environment temperature Tₒᵤₜ outside the railroad train is less than or equal to a preset temperature T_{f}, where the controller central processing unit preferentially starts an air conditioning system anti-freezing mode if it is determined that the environment temperature Tₒᵤₜ outside the railroad train is less than or equal to the preset temperature T_{f}.

Preferably, the air conditioning control system may further include:
a timing unit configured to record a duration for which the air conditioning system continuously operates in the low temperature train maintenance mode; and
an operation duration determining unit configured to determine whether the duration for which the air conditioning system continuously operates in the low temperature train maintenance mode is greater than a preset time period S₂, and determine whether there is other manual command input, where the controller central processing unit controls the air conditioning system to switch to an auto-control mode or a device heating operation mode if it is determined that the duration for which the air conditioning system continuously operates in the low temperature train maintenance mode is greater than the preset time period S₂ and there is no other manual command input.

Preferably, the air conditioning control system may further include:
a porch temperature sensor arranged at a porch of a carriage, where the porch temperature sensor is communicatively connected with the controller central processing unit, and is configured to obtain a temperature at the porch in the railroad train; and
a temperature correcting unit configured to correct a set temperature value of a porch vestibule control point based on an equation Tₕ=Tₛ+ΔTₕ, with Tₕ being a set temperature value of the porch vestibule control point in an extreme cold environment, Tₛ being a set temperature value of the porch vestibule control point in a normal environment, and ΔTₕ being a correction value of the porch vestibule control point in the extreme cold environment, where
the controller central processing unit controls a start time instant and a stop time instant of a heater based on a correction result of the temperature correction unit to maintain the temperature at the porch in the railroad train at the set temperature value Tₕ of the porch vestibule control point in the extreme cold environment.

Preferably, the air conditioning control system may further include:
a heater feedback period correction unit configured to correct a feedback identification period for starting the heater based on an equation Sₕ=Sₛ+ΔSₕ, where Sₕ is the feedback identification period in the extreme cold environment, the controller central processing unit identifies feedback from a control point at the expiry of the feedback identification period, Sₛ is the feedback period in the normal environment, and ΔSₕ is a correction value of the feedback period in the extreme cold environment.

Preferably, the air conditioning control system may further include:
a man-machine interactive device communicatively connected with the controller central processing unit, where the man-machine interactive device is provided with a button for controlling the air conditioning system to switch to the low temperature train maintenance mode, which is used by a driver to manually start the low temperature train maintenance mode.

Preferably, the controller central processing unit may be configured to control only a ventilator of a cab to be started up, and control devices in the air conditioning system other than the ventilator of the cab to be closed in a case that the low temperature train maintenance mode is manually started.

Preferably, the controller central processing unit may be configured to control the ventilator of the cab to be started up, and control air conditioning units and fresh air grilles in passenger compartments to be closed in the low temperature train maintenance mode.

Preferably, the man-machine interactive device may be provided with a button for controlling the air conditioning system to exit the low temperature train maintenance mode.

A railroad train is provided according to the present disclosure. The railroad train includes the air conditioning control system according to any one of the above.

An air conditioning control system for a railroad train is provided according to the present disclosure. The air conditioning control system includes an environment temperature detecting unit configured to obtain an environment temperature Tₒᵤₜ outside the railroad train; an environment temperature determining unit configured to determine whether the environment temperature Tₒᵤₜ outside the railroad train detected by the environment temperature detecting unit meets a normal environment condition or an extreme cold environment condition; a controller central processing unit communicatively connected with hardware devices of an air conditioning system such as the environment temperature detecting unit and air conditioning units and configured to control the air conditioning system to switch to a device heating operation mode if the environment temperature determining unit determines that the extreme cold environment condition is met, and initiate a logic such as an automatic operation logic if the environment temperature determining unit determines that the extreme cold environment condition is not met; a low temperature train maintenance signal input unit configured to receive a low temperature train maintenance signal, where in the device heating operation mode, the controller central processing unit controls the air conditioning system to switch to a low temperature train maintenance mode on reception of the low temperature train maintenance signal; an environment temperature abrupt change determining unit configured to determine whether a magnitude of change in the environment temperature Tₒᵤₜ outside the railroad train in a first preset time period S₁ is greater than or equal to ΔT, where in the device heating operation mode, the controller central processing unit controls the air conditioning system to switch to the low temperature train maintenance mode if it is determined that the magnitude of change in the environment temperature Tₒᵤₜ outside the railroad train in the first preset time period S₁ is greater than or equal to ΔT; and an anti-freezing determining unit configured to determine whether the environment temperature Tₒᵤₜ outside the railroad train is less than or equal to a preset temperature T_{f}, where the controller central processing unit preferentially starts an air conditioning system anti-freezing mode if it is determined that the environment temperature Tₒᵤₜ outside the railroad train is less than or equal to the preset temperature T_{f}.

It is determined whether the train is in an extreme cold environment. If the train is in the extreme cold environment, the air conditioning system switches to the device heating operation mode. In this case, the air conditioning system switches to the low temperature train maintenance mode or the air conditioning system anti-freezing mode if the environment temperature changes abruptly, thereby protecting devices in the air conditioning system, and avoiding simultaneous failure of a number of devices in the air conditioning system in the extreme cold region in winter, to ensure that the temperature in the compartment including the temperature in the end portions of the compartment can meet the comfort requirement in the extreme cold operation condition and effectively prevent frosting at the end portion or at doors of the train.

A railroad train including the above air conditioning control system is further provided according to the present disclosure. Since the air conditioning control system has the above technical effects, the railroad train also has the same technical effects, which are not described in detail here.

### BRIEF DESCRIPTION OF THE DRAWINGS

Figure 1 is a schematic structural diagram of an air conditioning control system according to an embodiment of the present disclosure; and
Figure 2 is a block diagram illustrating a control flow of an air conditioning control system according to an embodiment of the present disclosure.

### DETAILED DESCRIPTION OF EMBODIMENTS

The core of the present disclosure is to provide an air conditioning control system for a railroad train, which can adapts to the operation environment in an extreme cold region, and is capable of properly controlling the temperature of the carriage air conditioning units and protecting various devices of the air conditioning system from being damaged in the extreme cold region. Another core of the present disclosure is to provide a railroad train including the above air conditioning control system.

In the following, the present disclosure is described in further detail in conjunction with the drawings and specific embodiments, for better understanding of the solution of the present disclosure by those skilled in the art.

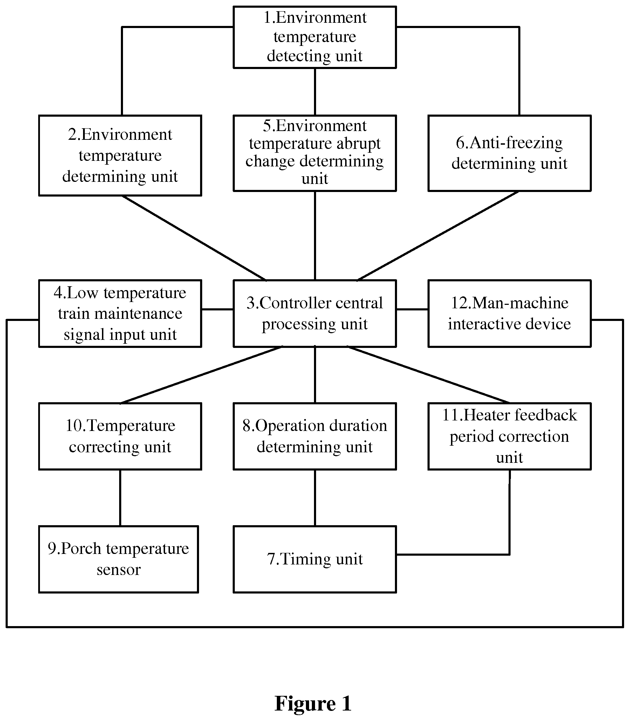

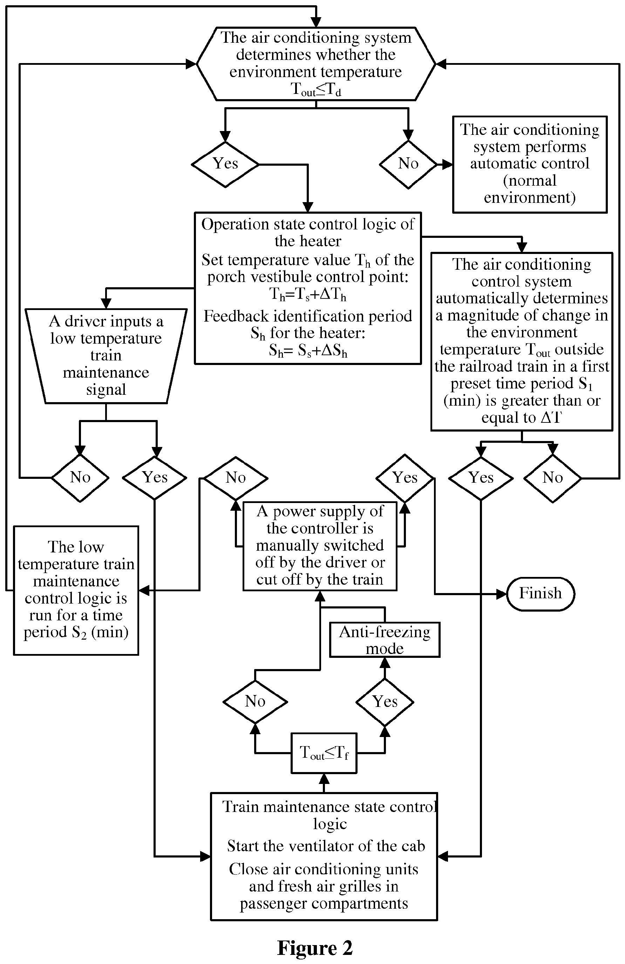

Reference is made to Figure 1 and Figure 2, where Figure 1 is a schematic structural diagram of an air conditioning control system according to an embodiment of the present disclosure, and Figure 2 is a block diagram illustrating a control flow of an air conditioning control system according to an embodiment of the present disclosure.

The air conditioning control system for a railroad train according to an embodiment of the disclosure includes an environment temperature detecting unit 1, an environment temperature determining unit 2, a controller central processing unit 3, a low temperature train maintenance signal input unit 4, an environment temperature abrupt change determining unit 5, and an anti-freezing determining unit 6.

The environment temperature detecting unit 1 is configured to obtain an environment temperature Tₒᵤₜ outside the railroad train.

The environment temperature determining unit 2 is configured to determine whether the environment temperature Tₒᵤₜ outside the railroad train detected by the environment temperature detecting unit 1 meets a normal environment condition or an extreme cold environment condition.

The controller central processing unit 3 is communicatively connected with hardware devices of an air conditioning system such as the environment temperature detecting unit and air conditioning units and is configured to control the air conditioning system to switch to a device heating operation mode if the environment temperature determining unit 2 determines that the extreme cold environment condition is met, and initiate a logic such as an automatic operation logic if the environment temperature determining unit 2 determines that the extreme cold environment condition is not met.

The low temperature train maintenance signal input unit 4 is configured to receive a low temperature train maintenance signal, where in the device heating operation mode, the controller central processing unit 3 controls the air conditioning system to switch to a low temperature train maintenance mode on reception of the low temperature train maintenance signal.

The environment temperature abrupt change determining unit 5 is configured to determine whether a magnitude of change in the environment temperature Tₒᵤₜ outside the railroad train in a first preset time period S₁ is greater than or equal to ΔT. In the device heating operation mode, the controller central processing unit 3 controls the air conditioning system to switch to the low temperature train maintenance mode if it is determined that the magnitude of change in the environment temperature Tₒᵤₜ outside the railroad train in the first preset time period S₁ is greater than or equal to ΔT.

The anti-freezing determining unit 6 is configured to determine whether the environment temperature Tₒᵤₜ outside the railroad train is less than or equal to a preset temperature T_{f}. The controller central processing unit 3 preferentially starts an air conditioning system anti-freezing mode if it is determined that the environment temperature Tₒᵤₜ outside the railroad train is less than or equal to the preset temperature T_{f}, where T_{f} is a preset temperature at which the air conditioning system anti-freezing mode is started.

The control procedure is as follows. The environment temperature Tₒᵤₜ outside the railroad train is obtained, and it is determined whether the environment temperature Tₒᵤₜ outside the railroad train meets the normal environment condition or the extreme cold environment condition. If it is determined that the extreme cold environment condition is met, the air conditioning system is controlled to switch to the device heating operation mode. If it is determined that the normal environment condition is met, the air conditioning system operates normally. In addition, if the environment temperature Tₒᵤₜ outside the railroad train is less than or equal to the preset temperature T_{f}, the controller central processing unit 3 preferentially starts the air conditioning system anti-freezing mode.

In the device heating operation mode, the low temperature train maintenance mode may be started in two manners. One manner is that a driver inputs a low temperature train maintenance signal. The other manner is that, it is determine whether a magnitude of change in the environment temperature Tₒᵤₜ outside the railroad train in a first preset time period S₁ is greater than or equal to ΔT, and in the device heating operation mode, the controller central processing unit 3 controls the air conditioning system to switch to the low temperature train maintenance mode if it is determined that the magnitude of change in the environment temperature Tₒᵤₜ outside the railroad train in the first preset time period S₁ is greater than or equal to ΔT.

In a case that the low temperature train maintenance mode is manually started, the controller central processing unit 3 controls only a ventilator of a cab to be started, and control devices in the air conditioning system other than the ventilator of the cab to be closed. In the low temperature train maintenance mode, the controller central processing unit 3 controls ventilator of the cab to be started, and controls air conditioning units and fresh air grilles in passenger compartments to be closed.

It is determined whether the train is in the extreme cold environment. If the train is in the extreme cold environment, the air conditioning system switches to the device heating operation mode. In this case, the air conditioning system switches to the low temperature train maintenance mode or the air conditioning system anti-freezing mode if the environment temperature changes abruptly, thereby protecting devices in the air conditioning system, and avoiding simultaneous failure of a number of devices in the air conditioning system in the extreme cold region in winter, to ensure that the temperature in the compartment including the temperature in the end portions of the compartment can meet the comfort requirement in the extreme cold operation condition and effectively prevent frosting at the end portion or at doors of the train.

The air conditioning control system according to the embodiments of the disclosure further includes a timing unit 7 and an operation duration determining unit 8.

The timing unit 7 is configured to record a duration for which the air conditioning system continuously operates in the low temperature train maintenance mode.

The operation duration determining unit 8 is configured to determine whether the duration for which the air conditioning unit continuously operates in the low temperature train maintenance mode is greater than a preset time period S₂, and determine whether there is other manual command input. The controller central processing unit 3 controls the air conditioning system to switch to an auto-control mode or a device heating operation mode if it is determined that the duration for which the air conditioning system continuously operates in the low temperature train maintenance mode is greater than the preset time period S₂ and there is no other manual command input.

In order to adapt to the low-temperature environment, stable operation of the devices is guaranteed by temperature correction and using a feedback period in the device heating operation mode.

The air conditioning control system according to the present disclosure further includes a porch temperature sensor 9, and a temperature correction unit 10.

The porch temperature sensor 9 is arranged at a porch of a carriage. The porch temperature sensor 9 is communicatively connected with the controller central processing unit 3, and is configured to obtain a temperature at the porch in the railroad train.

The temperature correction unit 10 is configured to correct a set temperature value of a porch vestibule control point based on an equation Tₕ=Tₛ+ΔTₕ, where Tₕ is a set temperature value of the porch vestibule control point in an extreme cold environment, Tₛ is a set temperature value of the porch vestibule control point in a normal environment, and ΔTₕ is a correction value of the porch vestibule control point in the extreme cold environment.

The controller central processing unit 3 controls a start time instant and a stop time instant of a heater based on a correction result of the temperature correcting unit 10 to maintain the temperature at the porch in the railroad train at the set temperature value Tₕ of the porch vestibule control point in the extreme cold environment.

The air conditioning control system further includes a heater feedback period correction unit 11. The heater feedback period correction unit 11 is configured to correct a feedback identification period for starting the heater based on an equation Sₕ=Sₛ+ΔSₕ, where Sₕ is the feedback identification period in the extreme cold environment, the controller central processing unit 3 identifies feedback from a control point at the expiry of the feedback identification period, Sₛ is the feedback period in the normal environment, and ΔSₕ is a correction value of the feedback period in the extreme cold environment.

On the basis of the air conditioning control system according to the above embodiment of the disclosure, the air conditioning control system further includes a man-machine interactive device 12 communicatively connected with the controller central processing unit 3. The man-machine interactive device 12 is provided with a button for controlling the air conditioning system to switch to the low temperature train maintenance mode, which is used by a driver to manually start the low temperature train maintenance mode. In addition, the man-machine interactive device 12 is provided with a button for controlling the air conditioning system to exit the low temperature train maintenance mode.

In addition to above the air conditioning control system, a railroad train including the above air conditioning control system is provided according to an embodiment of the disclosure. One can refer to the conventional technology for structures of components of the railroad train other than the air conditioning control system, which are not described in detail herein.

A railroad train and an air conditioning control system of the railroad train according to the present disclosure are described above in detail. The principle and the embodiments of the present disclosure are illustrated herein by specific examples. The above description of embodiments is only intended to help the understanding of the method and the spirit of the present disclosure. It should be noted that, several modifications and improvements can be made to the present disclosure by those skilled in the art without departing from the principle of the present disclosure, and these modifications and improvements should fall within the scope of protection of the present disclosure defined by the appended claims.

## Claims

1. An air conditioning control system for a railroad train, comprising:
an environment temperature detecting unit (1) configured to obtain an environment temperature Tₒᵤₜ outside the railroad train;
an environment temperature determining unit (2) configured to determine whether the environment temperature Tₒᵤₜ outside the railroad train detected by the environment temperature detecting unit (1) meets a normal environment condition or an extreme cold environment condition;
a controller central processing unit (3) communicatively connected with the environment temperature detecting unit and air conditioning units and configured to control an air conditioning system to switch to a device heating operation mode if the environment temperature determining unit (2) determines that the extreme cold environment condition is met;
a low temperature train maintenance signal input unit (4) configured to receive a low temperature train maintenance signal, wherein in the device heating operation mode, the controller central processing unit (3) controls the air conditioning system to switch to a low temperature train maintenance mode on reception of the low temperature train maintenance signal;
an environment temperature abrupt change determining unit (5) configured to determine whether a magnitude of change in the environment temperature Tₒᵤₜ outside the railroad train in a first preset time period S₁ is greater than or equal to ΔT, wherein in the device heating operation mode, the controller central processing unit (3) controls the air conditioning system to switch to the low temperature train maintenance mode if it is determined that the magnitude of change in the environment temperature Tₒᵤₜ outside the railroad train in the first preset time period S₁ is greater than or equal to ΔT; and
an anti-freezing determining unit (6) configured to determine whether the environment temperature Tₒᵤₜ outside the railroad train is less than or equal to a preset temperature T_{f}, wherein the controller central processing unit (3) preferentially starts an air conditioning system anti-freezing mode if it is determined that the environment temperature Tₒᵤₜ outside the railroad train is less than or equal to the preset temperature T_{f}.

2. The air conditioning control system according to claim 1, further comprising:
a timing unit (7) configured to record a duration for which the air conditioning system continuously operates in the low temperature train maintenance mode; and
an operation duration determining unit (8) configured to determine whether the duration for which the air conditioning system continuously operates in the low temperature train maintenance mode is greater than a preset time period S₂, and determine whether there is other manual command input, wherein the controller central processing unit (3) controls the air conditioning system to switch to an auto-control mode or a device heating operation mode if it is determined that the duration for which the air conditioning system continuously operates in the low temperature train maintenance mode is greater than the preset time period S₂ and there is no other manual command input.

3. The air conditioning control system according to claim 2, further comprising:
a porch temperature sensor (9) arranged at a porch of a carriage, wherein the porch temperature sensor (9) is communicatively connected with the controller central processing unit (3), and is configured to obtain a temperature at the porch in the railroad train; and
a temperature correcting unit (10) configured to correct a set temperature value of a porch vestibule control point based on an equation Tₕ=Tₛ+ΔTₕ, with Tₕ being a set temperature value of the porch vestibule control point in an extreme cold environment, Tₛ being a set temperature value of the porch vestibule control point in a normal environment, and ΔTₕ being a correction value of the porch vestibule control point in the extreme cold environment, wherein
the controller central processing unit (3) controls a start time instant and a stop time instant of a heater based on a correction result of the temperature correction unit (10) to maintain the temperature at the porch in the railroad train at the set temperature value Tₕ of the porch vestibule control point in the extreme cold environment.

4. The air conditioning control system according to claim 3, further comprising:
a heater feedback period correction unit (11) configured to correct a feedback identification period for starting the heater based on an equation Sₕ=Sₛ+ΔSₕ, wherein Sₕ is the feedback identification period in the extreme cold environment, the controller central processing unit (3) identifies feedback from a control point at the expiry of the feedback identification period, Sₛ is the feedback period in the normal environment, and ΔSₕ is a correction value of the feedback period in the extreme cold environment.

5. The air conditioning control system according to any one of claims 1 to 4, further comprising:
a man-machine interactive device (12) communicatively connected with the controller central processing unit (3), wherein the man-machine interactive device (12) is provided with a button for controlling the air conditioning system to switch to the low temperature train maintenance mode, which is used by a driver to manually start the low temperature train maintenance mode.

6. The air conditioning control system according to claim 5, wherein the controller central processing unit (3) is configured to control only a ventilator of a cab to be started, and control devices in the air conditioning system other than the ventilator of the cab to be closed in a case that the low temperature train maintenance mode is manually started.

7. The air conditioning control system according to claim 6, wherein the controller central processing unit (3) is configured to control the ventilator of the cab to be started up, and control air conditioning units and fresh air grilles in passenger compartments to be closed in the low temperature train maintenance mode.

8. The air conditioning control system according to claim 7, wherein the man-machine interactive device (12) is provided with a button for controlling the air conditioning system to exit the low temperature train maintenance mode.

9. A railroad train, comprising the air conditioning control system according to any one of claims 1 to 8.
